# EUROPEAN PATENT APPLICATION

(11) **EP 4 421 492 A1**
(43) Date of publication of application: **28.08.2024**
(21) Application number: 22883438.8
(22) Date of filing: 12.10.2022
(51) Int. Cl.: G01N 35/04

(54) **AUTOMATED ANALYSIS SYSTEM, AND CONVEYING METHOD**

(30) Priority: 22.10.2021 JP 2021172989
(71) Applicant: HITACHI HIGH-TECH CORPORATION, Tokyo 105-6409 (JP)
(72) Inventor: FUKUDA Nobuya, Tokyo 105-6409 (JP); SAKASHITA Yukinori, Tokyo 105-6409 (JP); IMAI Kenta, Tokyo 105-6409 (JP)
(74) Representative: Strehl Schübel-Hopf & Partner
(86) International application number: PCT/JP2022/038033
(87) International publication number: WO 2023/068134

(57) **Abstract**

When a robot arm that has six degrees of freedom or more for automating the loading of a reagent or a sample into an automatic analyzer is introduced, a teaching operation that creates the operation program of the robot arm is troublesome, and much time and effort are required. An automatic analyzing system includes an automatic analyzer 122 that analyzes a sample, a conveying portion 101 that conveys a vessel that accommodates a liquid, a loading portion that receives the vessel from the conveying portion and loads the vessel into the automatic analyzer, and a correction portion 115 that performs position correction between the conveying portion and the loading portion in order for the conveying portion to be able to deliver the vessel to the loading portion. The correction portion includes a hole provided in the loading portion and for constraining rotation motion, one rotation shaft or more, an extension and contraction portion that is provided in the loading portion and generates tension that holds a rotation angle constant, and a member that is provided in the conveying portion and constrains the rotation motion. By inserting the end of the member into the hole, the position correction between the conveying portion and the loading portion is performed. By the rotation motion about the rotation shaft, the vessel is delivered from the conveying portion to a loading opening.

## Description

### Technical Field

The present invention relates to an automatic analyzing system and a conveying method.

### Background Art

Conventionally, various reagents or samples have been mainly manually conveyed to and loaded into an automatic analyzer that analyzes blood. In this case, the sample may be touched by a human being, thereby causing an infectious risk. In addition, when the reagent is touched by the human being, a risk of mixing an organic substance derived from the human being into the reagent is caused. Accordingly, Patent Literature 1 discloses a technique for conveying the reagent or the sample by a self-traveling conveying robot.

### Citation List

### Patent Literature

[Patent Literature 1] Japanese Unexamined Patent Application Publication No. 2001-278409

### Summary of Invention

### Technical Problem

Patent Literature 1 discloses the technique for conveying the reagent or the sample by the self-traveling robot and the like, and since the teaching operation for creating the operation program of the robot arm that has six degrees of freedom or more for automating the loading of the reagent or the sample into the automatic analyzer is troublesome, the introduction of the robot arm requires much time and effort. In addition, when the conveying robot is introduced into a facility in which the automatic analyzer is already installed, the re-examination of the layout of the automatic analyzer is required depending on the case, so that there is a problem that it takes much time and cost.

Accordingly, an object of the present invention is to provide an automatic analyzing system that freely sets a vertical or horizontal dimension with respect to a traveling surface and has no influence on the layout of a device. Solution to Problem

An automatic analyzing system according to one aspect of the present invention, comprises: an automatic analyzer that analyzes a sample; a conveying portion that conveys a vessel that accommodates a liquid; a loading portion that receives the vessel from the conveying portion and loads the vessel into the automatic analyzer; and a correction portion that performs, in order to be capable of allowing the conveying portion to deliver the vessel to the loading portion, position correction between the conveying portion and the loading portion. In the automatic analyzing system, the correction portion includes: a hole provided in the loading portion and for constraining rotation motion; one rotation shaft or more; an extension and contraction portion that is provided in the loading portion and generates tension that holds a rotation angle constant; and a member that is provided in the conveying portion and constrains the rotation motion.

### Advantageous Effects of Invention

According to the present invention, it is possible to provide an automatic analyzing system that freely sets a vertical or horizontal dimension with respect to a traveling surface and has no influence on the layout of a device.

### BRIEF DESCRIPTION OF THE DRAWINGS

FIG. 1 is a diagram illustrating a configuration example of a conveying portion of an automatic analyzer;
FIG. 2 is a diagram illustrating a hand portion;
FIG. 3 is a diagram illustrating the rear surface of a correction portion;
FIG. 4 is a diagram illustrating the front surface of the correction portion;
FIG. 5 is a diagram illustrating a state where the correction portion is installed in the automatic analyzer;
FIG. 6 is a diagram illustrating a state where the conveying portion is installed on the front surface of the automatic analyzer;
FIG. 7 is a diagram illustrating a state before the lifting of a vertical driving mechanism;
FIG. 8 is a diagram illustrating a state after the lifting of the vertical driving mechanism;
FIG. 9 is a diagram illustrating a state before the movement of a horizontal driving mechanism;
FIGS. 10 are schematic diagrams of the correction portion;
FIG. 11 is a diagram illustrating a spring reaction force caused when a roll axis rotation shaft rotates counterclockwise;
FIG. 12 is a schematic diagram of the conveying portion;
FIG. 13 is a diagram illustrating a first stage of a liquid vessel loading flow;
FIG. 14 is a diagram illustrating a second stage of the liquid vessel loading flow;
FIG. 15 is a diagram illustrating a third stage of the liquid vessel loading flow;
FIG. 16 is a diagram illustrating a fourth stage of the liquid vessel loading flow;
FIG. 17 is a diagram illustrating a fifth stage of the liquid vessel loading flow;
FIG. 18 is a diagram illustrating a sixth stage of the liquid vessel loading flow;
FIG. 19 is a diagram illustrating a seventh stage of the liquid vessel loading flow;
FIGS. 20 are three-view diagrams illustrating the shape of a positioning pin;
FIG. 21 is a diagram illustrating the automatic analyzer and the conveying portion; and
FIG. 22 is a diagram illustrating the overall configuration of an automatic analyzing system.

### DESCRIPTION OF EMBODIMENTS

Hereinbelow, embodiments will be described with reference to the drawings. It should be noted that in all the drawings for describing the embodiments, the same portions are indicated by the same reference numerals in principle, and the repeated description thereof is omitted.

### First Embodiment

A first embodiment is an embodiment of an automatic analyzing system that achieves the translational driving of the X, Y, and Z axes of the robot arm and the rotational driving of the roll, pitch, and yaw axis by different mechanisms, and drives the respective mechanisms on the basis of sensor information, or drives the respective mechanisms by physical position correction, thereby eliminating teaching.

That is, this embodiment is an embodiment of the automatic analyzing system including an automatic analyzer that analyzes a sample, a conveying portion that conveys a vessel that accommodates the sample, a loading portion that receives the vessel from the conveying portion and loads the vessel into the automatic analyzer, and a correction portion that performs position correction between the conveying portion and the loading portion in order for the conveying portion to be able to deliver the vessel to the loading portion, in which the correction portion includes a hole provided in the loading portion and for constraining rotation motion, one rotation shaft or more, an extension and contraction portion that is provided in the loading portion and generates tension that holds a rotation angle constant, and a member that is provided in the conveying portion and constrains the rotation motion, in which by inserting the end of the member into the hole, the position correction between the conveying portion and the loading portion is performed, and in which by the rotation motion about the rotation shaft, the vessel is delivered from the conveying portion to a loading opening, and a conveying method of the same.

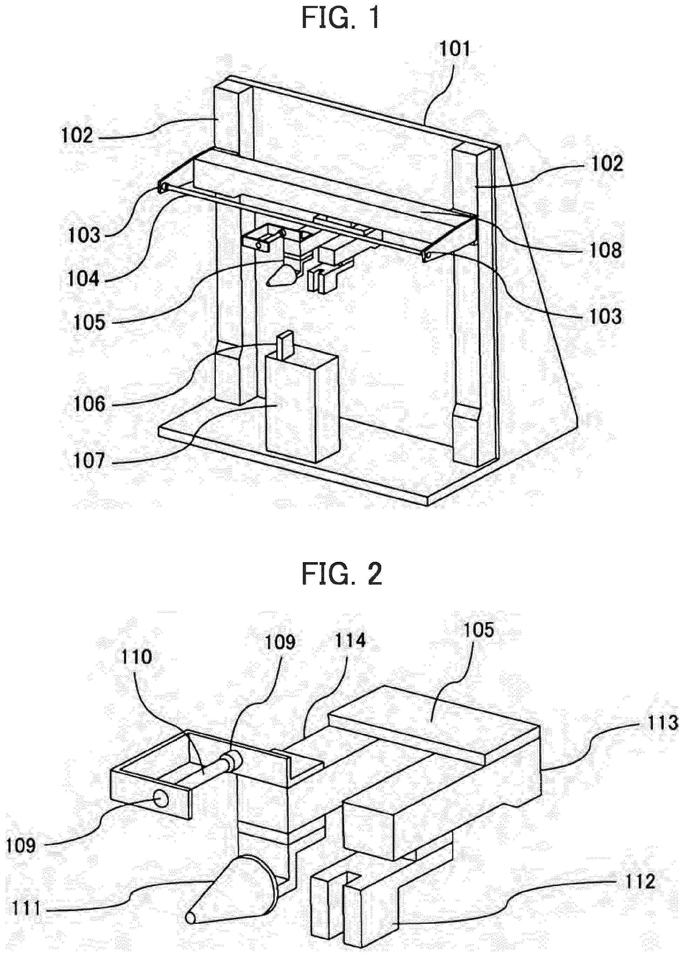

FIG. 1 is a diagram illustrating the configuration of the conveying portion (also referred to as an autonomous moving cart or a robot) that conveys the vessel that accommodates the liquid of the automatic analyzing system. As illustrated in the drawing, a conveying portion 101 includes: a vertical driving mechanism 102 and a horizontal driving mechanism 108 that drive a vertical transmission type sensor 103 and a hand portion 105; a vessel 106 that accommodates the liquid; a vessel storing portion 107 that stores the vessel 106, and the like. The reference numeral 104 denotes transmission light of vertical transmission type sensor.

FIG. 2 is a diagram illustrating the hand portion of the automatic analyzing system. As illustrated in the drawing, the hand portion 105 includes a horizontal transmission type sensor 109, a positioning pin 111, a grasping hand 112, a grasping hand driving mechanism 113, and a positioning pin driving mechanism 114. The transmission light of vertical transmission type sensor 104 and transmission light of horizontal transmission type sensor 110 illustrated in FIGS. 1 and 2 are blocked according to the position of the hand portion 105, as appropriate, and can generate the sensor information.

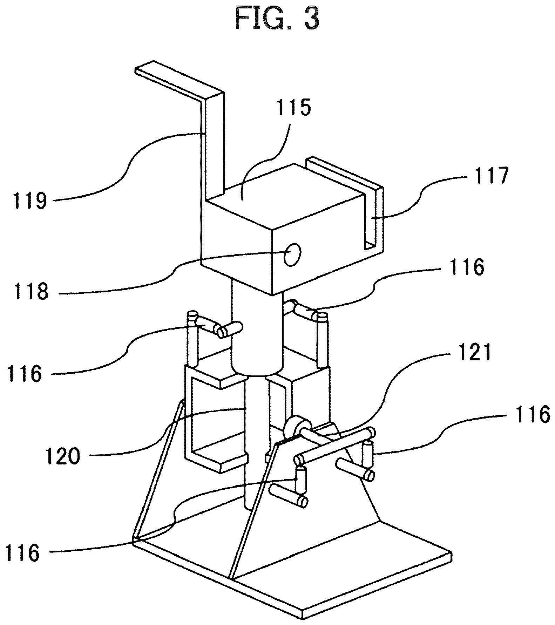

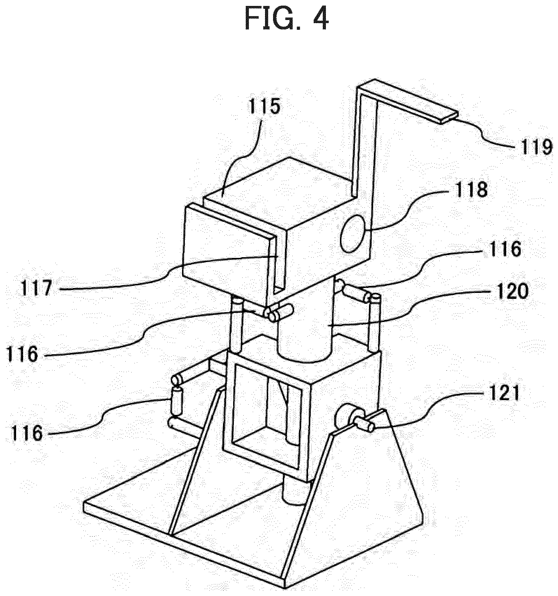

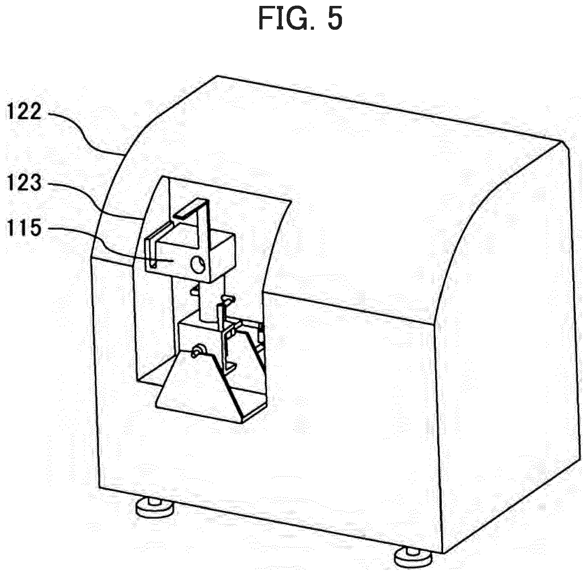

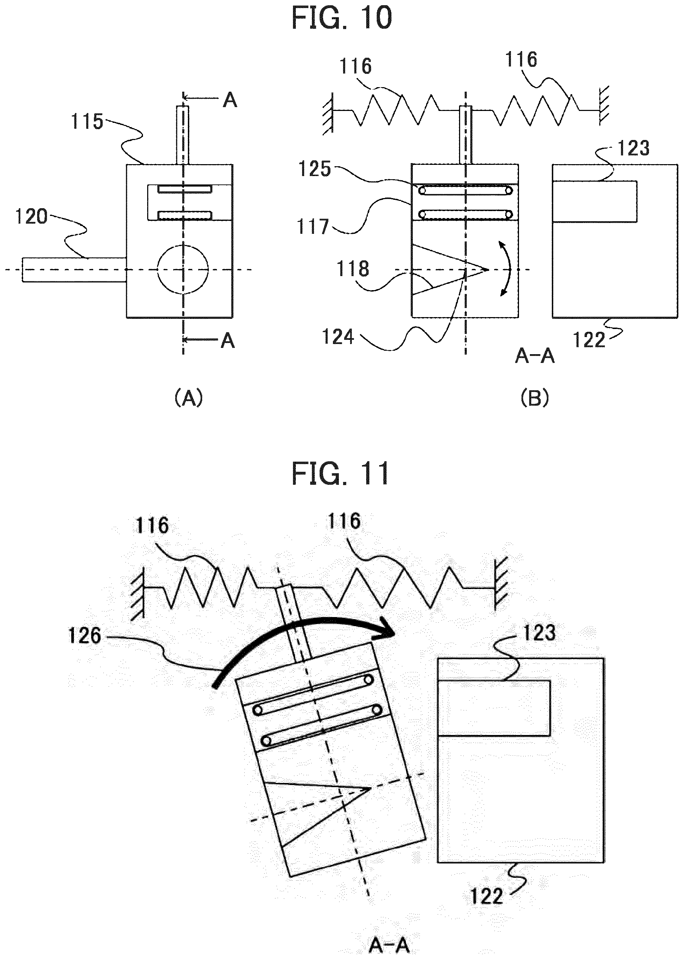

FIG. 3 is a diagram illustrating the rear surface of a correction portion 115, FIG. 4 is a diagram illustrating the front surface of the correction portion 115, and FIG. 5 is a diagram illustrating a state where the correction portion is installed in the automatic analyzing system. The correction portion 115 illustrated in FIGS. 3 and 4 includes a loading portion 117 for the vessel 106, a positioning pin hole 118, and a detection plate 119, and as illustrated in FIGS. 10, the correction portion 115 is pulled by tension springs 116, and is rotatable around a roll axis rotation shaft 120 and a yaw axis rotation shaft 121. As illustrated in FIG. 5, the correction portion 115 is installed in a loading opening 123 for the vessel 106 that is the loading portion of an automatic analyzer 122.

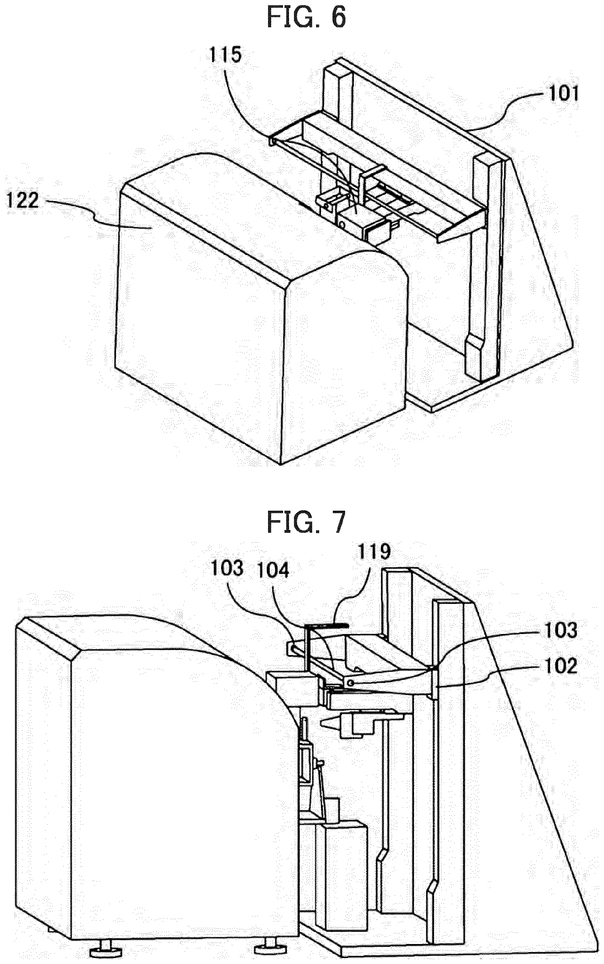

FIG. 6 is a diagram illustrating a state where the conveying portion 101 is installed on the front surface of the automatic analyzer 122. As illustrated in the drawing, at the time of installing the correction portion 115, the conveying portion 101 conveys the correction portion 115 to the liquid vessel loading opening of the automatic analyzer 122. Then, as illustrated in FIGS. 7, 8, and 9, the correction portion 115 is installed at predetermined positions.

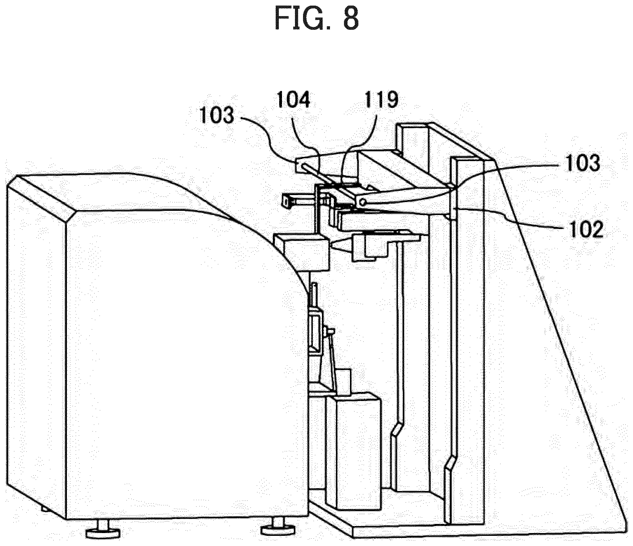

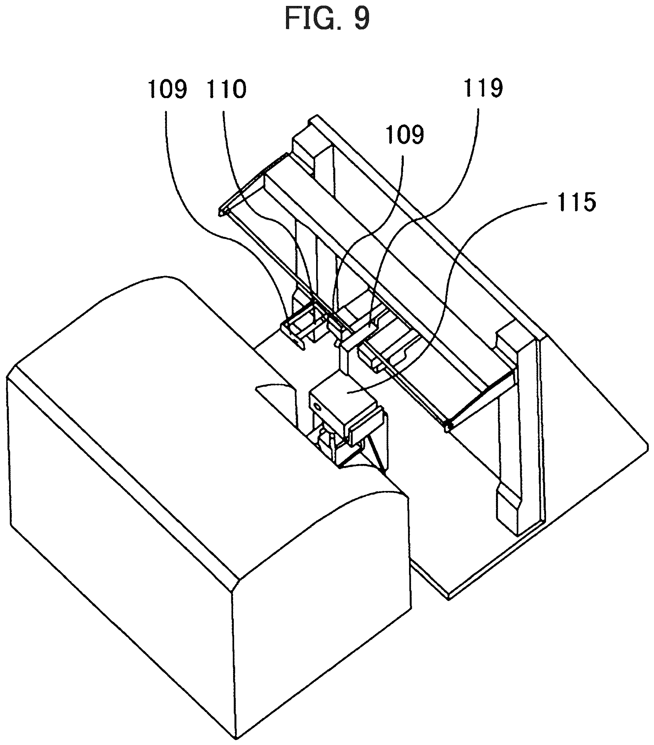

FIG. 7 is a diagram illustrating the arrangement position of the jack at the time of installing the correction portion 115, FIG. 8 is a diagram illustrating the lift function of the automatic analyzing system, and FIG. 9 is a diagram illustrating a state after the removal of the handle after the correction portion 115 is conveyed to the predetermined position. FIGS. 7 and 8 illustrate a state before the lifting of the vertical driving mechanism and a state after the lifting of the vertical driving mechanism, respectively.

FIGS. 10(A) and 10(B) illustrate schematic diagrams of the correction portion. As illustrated in FIG. 10(A), the correction portion 115 is rotatable about the roll axis rotation shaft 120. However, as illustrated in the cross section taken along line A-A illustrated in FIG. 10(B), tension is applied to the correction portion 115 by the tension springs 116 so as to be positioned at the center at all times. Thus, for example, as illustrated in FIG. 11, when the correction portion 115 is rotated counterclockwise by an external force, the correction portion 115 is rotated clockwise by spring reaction force 125 (126) caused about roll axis rotation shaft by the tension of the tension springs 116, and is returned to the original angle.

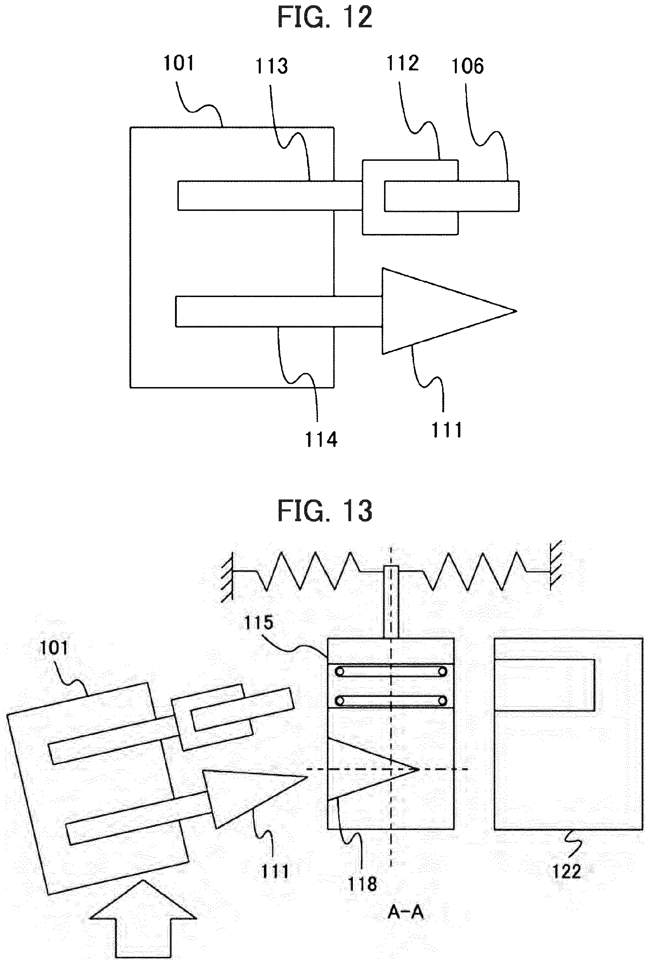

FIG. 12 illustrates a schematic diagram of the conveying portion 101. The positioning pin 111 and the hand 112 capable of grasping the vessel 106 are attached to the ends of the grasping hand driving mechanism 113 and the positioning pin driving mechanism 114 that are provided to the conveying portion 101, respectively.

FIGS. 13 to 19 illustrate first to seventh stages of a liquid vessel loading flow. The drawings are drawings when the automatic analyzer 122 is seen from directly above. As illustrated in FIG. 13, the conveying portion 101 moves to near the correction portion 115 by linear motion, but cannot load the vessel 106 as-is since the angles are different.

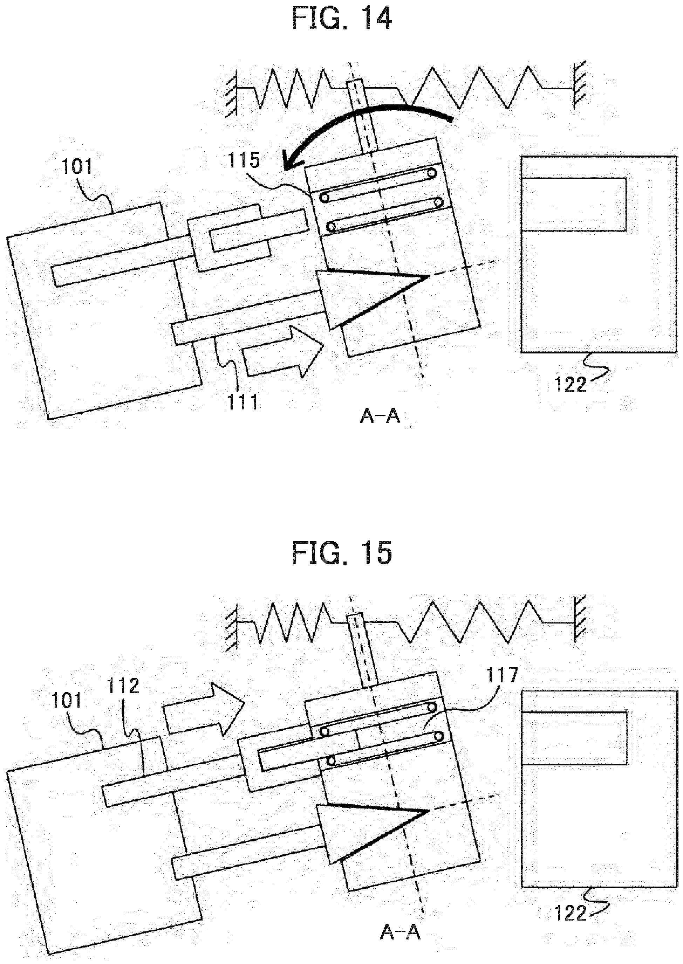

As illustrated in the drawing, at the first stage, the positioning pin 111 that is attached to the positioning pin driving mechanism 114 that is provided to the conveying portion 101 is inserted into the positioning pin hole 118 of the correction portion 115. As illustrated in FIG. 14, in the automatic analyzing system, the positioning pin 111 is inserted into the hole of the correction portion. As described above, since the correction portion 115 is rotatable and the positioning pin 111 is in wedge shape or conical shape, the correction portion 115 is rotated at the same angle as the conveying portion 101. Here, the hand 112 is extended to deliver the vessel 106 to the loading portion 117, and the hand is returned. Since in this state, the angles of the correction portion and the automatic analyzer are different, the vessel cannot be delivered to the automatic analyzer. Accordingly, when the positioning pin is returned, the correction portion is rotated by the tension of the springs so as to be returned to the original position, the loading portion 117 is made to have the same angle as the automatic analyzer 122, and the vessel 106 can be delivered from the loading portion 117 to the automatic analyzer 122.

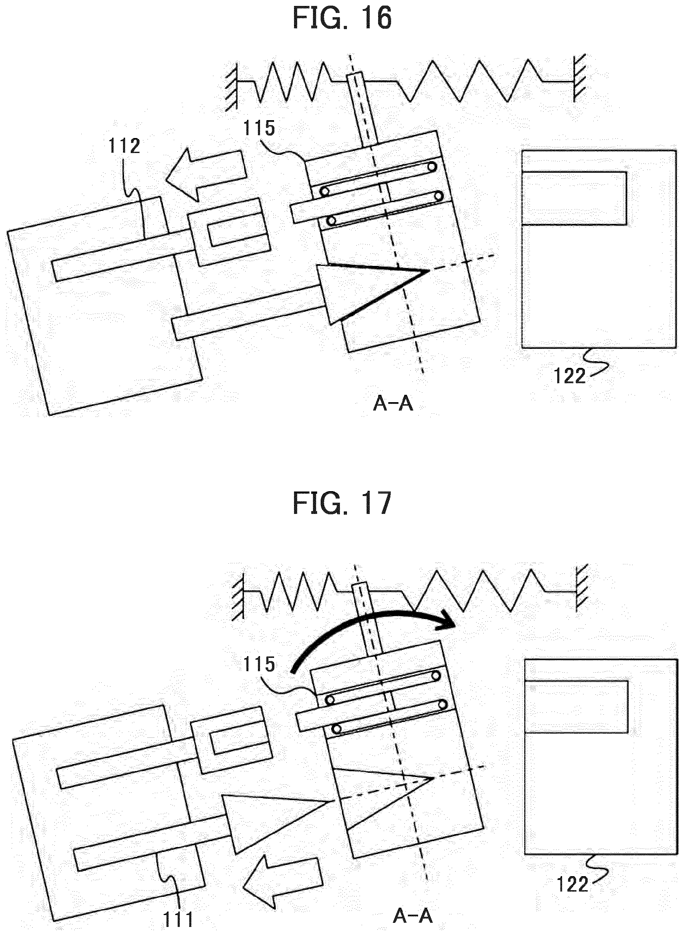

That is, the correction portion 115 is rotatable, and the end of the positioning pin 111 is in wedge shape or conical shape, as illustrated in FIG. 14, the correction portion 115 is rotated at the same angle as the conveying portion 101. Successively, as illustrated in FIG. 15, the hand 112 is extended to deliver the vessel 106 to the loading portion 117, and as illustrated in FIG. 16, the hand 112 is returned. Since in this state, the angles of the correction portion 115 and the automatic analyzer 122 are different, the vessel 106 cannot be delivered to the automatic analyzer 122.

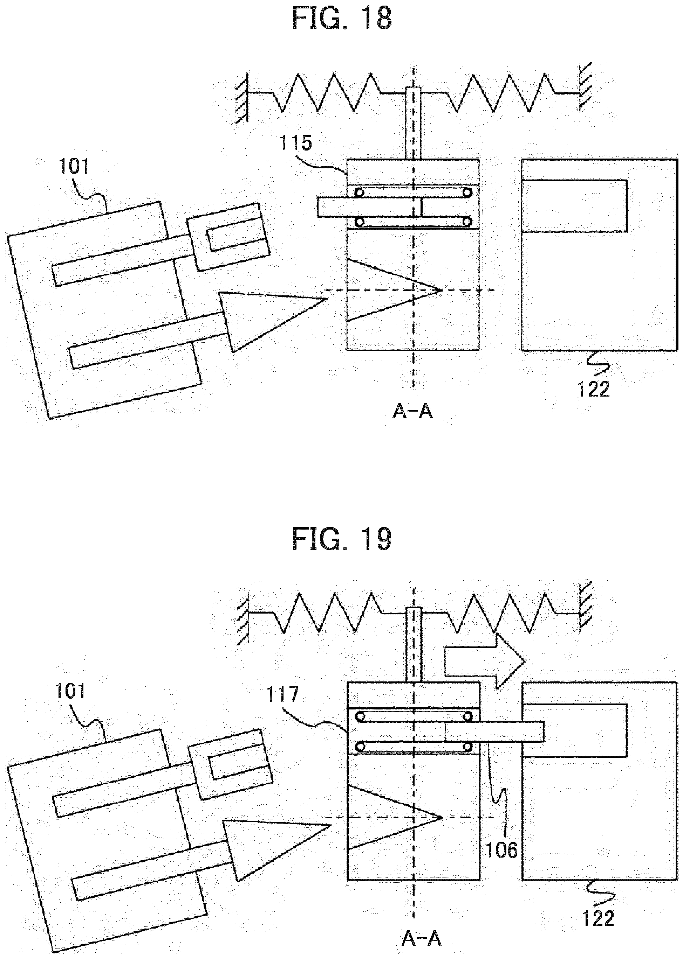

Accordingly, as illustrated in FIG. 17, when the positioning pin 111 is returned, the correction portion 115 is rotated by the tension of the tension springs 116 so as to be returned to the original position, and as illustrated in FIG. 18, the loading portion 117 is made to have the same angle as the automatic analyzer 122. With that, as illustrated in the seventh stage of FIG. 19, the vessel 106 can be delivered from the loading portion 117 to the loading opening 123 of the automatic analyzer 122.

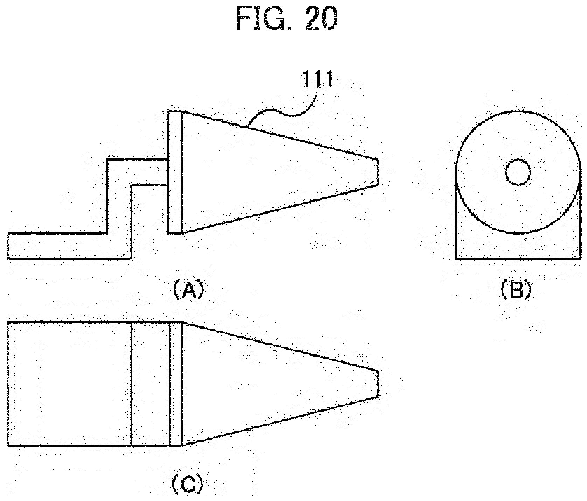

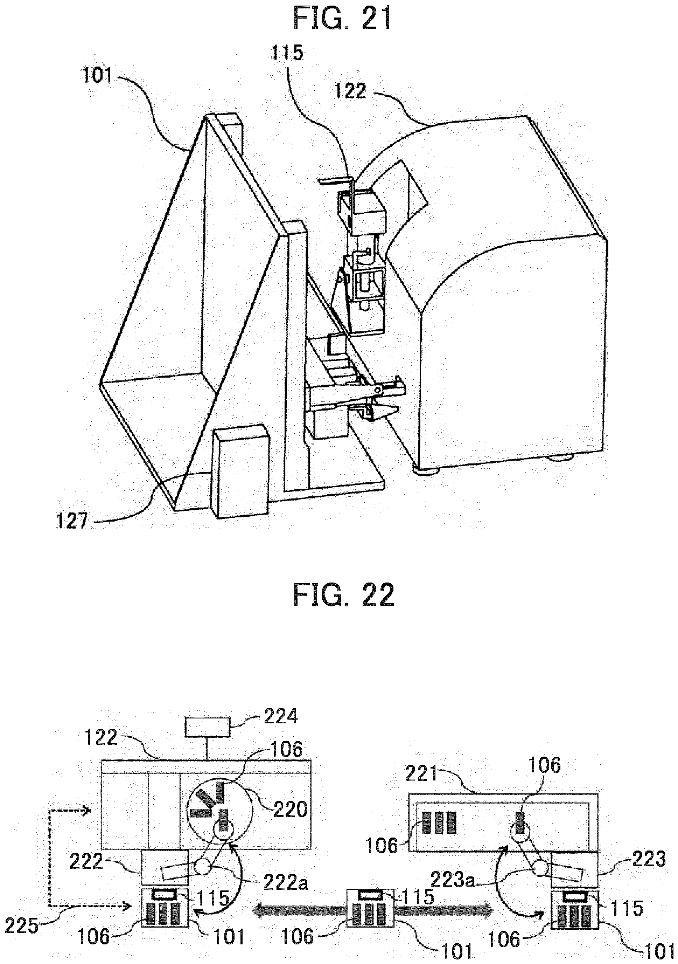

FIGS. 20(A), 20(B), and 20(C) are three-view diagrams illustrating the shape of the positioning pin 111. FIGS. 20(A), 20(B), and 20(C) illustrate the side view, front view, and top view of the pin 111. FIG. 21 is a diagram illustrating the automatic analyzer and the conveying portion. The respective components of this system can be operated by the control of a control device 126 (127) that is provided to the conveying portion 101 and includes a central processing unit (CPU) and the like.

### Second Embodiment

A second embodiment relates to the overall configuration of the automatic analyzing system. FIG. 22 is a diagram illustrating the overall configuration of the automatic analyzing system. The automatic analyzing system includes: the automatic analyzer 122 that includes a vessel storing portion (for example, a reagent disk) 220 that stores a plurality of vessels 106 (for example, reagent vessels); an outside storage cabinet 221 that is provided in the outside of the automatic analyzer 122 and stores the plurality of vessels 106; the conveying portion 101 that conveys the vessel 106 between the outside storage cabinet 221 and the automatic analyzer 122; a conveying mechanism for vessel storing portion (a first conveying mechanism) 222 that performs the delivering of the vessel 106 via an arm 222a between the automatic analyzer 122 and the conveying portion 101; a conveying mechanism for outside storage cabinet (a second conveying mechanism) 223 that performs the delivering of the vessel 106 via an arm 223a between the outside storage cabinet 221 and the conveying portion 101; and a display portion 224 that displays various information with respect to a user.

The first conveying mechanism 222 is fixed to the automatic analyzer 122, and is set so as to be able to precisely insert the vessel 106 from the arm 222a into the loading opening 123 (for example, a reagent slot) of the automatic analyzer 122. This is because when the insertion of the vessel 106 into the loading opening 123 is displaced even slightly, the normal installation into the vessel storing portion 220 is not enabled, thereby inversely affecting the analysis. On the other hand, since the conveying portion 101 and the first conveying mechanism 222 are replacing operation mechanisms, they can have relative tolerance for the position relationship between them. That is, when the arm 222a receives the vessel 106 from the conveying portion 101 or the arm 222a places the vessel 106 onto the conveying portion 101, there is tolerance above a certain level. In this way, it is important that position accuracy between the first conveying mechanism 222 and the automatic analyzer 122 be designed to be higher than position accuracy between the first conveying mechanism 222 and the conveying portion 101.

Likewise, it is preferable that the second conveying mechanism 223 be also fixed to the outside storage cabinet 221. Note that for the outside storage cabinet 221, novel design according to the conveying portion 101 may be enabled. Therefore, when the design is enabled, position accuracy between the second conveying mechanism 223 and the outside storage cabinet 221 is not required to be higher than position accuracy between the second conveying mechanism 223 and the conveying portion 101.

It should be noted that although the first embodiment illustrates that the correction portion 115 also serves as the function of delivering the vessel 106 to the automatic analyzer 122, the second embodiment separates the correction portion 115 and the mechanism that delivers the vessel. That is, the conveying portion 101 that has moved from the outside storage cabinet 221 moves to the front of the automatic analyzer 122, uses the correction portion 115 to correct the position with respect to the automatic analyzer 122, and uses the first conveying mechanism 222 to deliver the vessel 106 to the automatic analyzer 122. Likewise, the conveying portion 101 that has moved from the automatic analyzer 122 moves to the front of the outside storage cabinet 221, uses the correction portion 115 to correct the position with respect to the outside storage cabinet 221, and uses the second conveying mechanism 223 to deliver the vessel 106 to the outside storage cabinet 221.

The conveying portion 101 may include an expansion storge cabinet that stores the vessel 106 that cannot be stored only by the vessel storing portion 220. That is, the first conveying mechanism and the conveying portion 101 can be operated like the expansion storage cabinet. For example, preferably, the storage cabinet that keeps the vessel 106 cool is mounted on the upper portion of the conveying portion 101, the automatic analyzer 122 manages management information 225 also including the vessel 106 on the conveying portion 101, and the first conveying mechanism and the conveying portion 101 are in a state of being able to be operated like the expansion storge cabinet in which the maximum number of vessels stored in the automatic analyzer 122 is increased. By doing this, the conveying portion 101 can store the plurality of vessels 106 at all times, and can also supply the vessel 106 from the expansion storage cabinet to the vessel storing portion 220, as needed. It should be noted that the physical arrangement place of the vessel 106 in which the vessel 106 is physically stored in the outside of the vessel storing portion 220 and appears to be virtually stored in the inside of the expansion storage cabinet is not limited to be on the conveying portion 101. For example, the vessel 106 may be removable from the automatic analyzer 122, or may be distributably arranged at the appropriate position in the automatic analyzing system.

In addition, all the reagent vessels may be displayed to the user so as to be stored in the same virtual space. That is, the physical arrangement place and the virtual arrangement place of the vessel 106 are associated with each other to be stored, and the physical arrangement place is converted to the virtual arrangement place to be displayed on the display portion 224. Note that the user is required to discriminate whether the vessel 106 is disposed in the inside of the automatic analyzer 122 and is in a state of being usable for the analysis or the vessel 106 is disposed in the outside of the automatic analyzer 122 and is in a state of being non-usable for the analysis. Accordingly, information that indicates whether the target vessel 106 is in the inside or outside of the automatic analyzer 122 may be provided to the display portion 224.

The automatic analyzer 122 transmits and receives the management information 225 to and from the conveying portion 101 and the outside storage cabinet 221 (when the expansion storage cabinet is disposed in the outside of the conveying portion 101, the automatic analyzer 122 transmits and receives the management information 225 also to and from the expansion storage cabinet). The management information 225 is information for managing the liquid (for example, a reagent) stored in the vessel storing portion 220, the conveying portion 101, the outside storage cabinet 221, and/or the expansion storage cabinet. The management information 225 is transmitted and received among the automatic analyzer 122, the outside storage cabinet 221, and the conveying portion 101, so that the vessel 106 necessary for the analysis can be conveyed to the appropriate position at the appropriate timing.

It should be noted that the management information 225 may be stored in any one of the storage device included in the automatic analyzer 122, the storage device included in the conveying portion 101, the storage device included in the different mechanism, and the like. In addition, the control portion that performs the control related to the transmission and reception of the management information 225 may also be installed in any place.

### List of Reference Signs

- 101:: conveying portion
- 102:: vertical driving mechanism
- 103:: vertical transmission type sensor
- 104:: transmission light of vertical transmission type sensor
- 105:: hand portion
- 106:: vessel
- 107:: vessel storing portion
- 108:: horizontal driving mechanism
- 109:: horizontal transmission type sensor
- 110:: transmission light of horizontal transmission type sensor
- 111:: positioning pin
- 112:: grasping hand
- 113:: grasping hand driving mechanism
- 114:: positioning pin driving mechanism
- 115:: correction portion
- 116:: tension spring
- 117:: loading portion
- 118:: positioning pin hole
- 119:: detection plate
- 120:: roll axis rotation shaft
- 121:: yaw axis rotation shaft
- 122:: automatic analyzer
- 123:: loading opening
- 124:: roll axis rotation center
- 125:: spring reaction force caused about roll axis rotation shaft
- 126:: control device
- 220:: vessel storing portion
- 221:: outside storage cabinet
- 222:: conveying mechanism for vessel storing portion
- 223:: conveying mechanism for outside storage cabinet
- 224:: display portion
- 225:: management information

## Claims

1. An automatic analyzing system comprising:
an automatic analyzer that analyzes a sample;
a conveying portion that conveys a vessel that accommodates a liquid;
a loading portion that receives the vessel from the conveying portion and loads the vessel into the automatic analyzer; and
a correction portion that performs position correction between the conveying portion and the loading portion, wherein
the correction portion includes: a hole provided in the loading portion and for constraining rotation motion; one rotation shaft or more; an extension and contraction portion that is provided in the loading portion and generates tension that holds a rotation angle constant; and a member that is provided in the conveying portion and constrains the rotation motion.

2. The automatic analyzing system according to claim 1, wherein by inserting the end of the member into the hole, the position correction between the conveying portion and the loading portion is performed.

3. The automatic analyzing system according to claim 2, wherein by the rotation motion about the rotation shaft, the vessel is delivered from the conveying portion to the loading portion.

4. The automatic analyzing system according to claim 2, wherein the member is a member that has an end in wedge shape or conical shape.

5. The automatic analyzing system according to claim 2, wherein the extension and contraction portion includes a tension spring.

6. A conveying method of an automatic analyzing system including: an automatic analyzer that analyzes a sample; a conveying portion that conveys a vessel that accommodates a liquid; a loading portion that receives the vessel from the conveying portion and loads the vessel into the automatic analyzer; and a correction portion that performs position correction between the conveying portion and the loading portion, wherein
the correction portion includes: a hole provided in the loading portion and for constraining rotation motion; one rotation shaft or more; an extension and contraction portion that is provided in the loading portion and generates tension that holds a rotation angle constant; and a member that is provided in the conveying portion and constrains the rotation motion,
the conveying method including:
a step of performing the position correction between the conveying portion and the loading portion; and
a step of delivering the vessel from the conveying portion to the loading portion on the basis of the position correction.

7. An automatic analyzing system comprising:
an automatic analyzer that includes a vessel storing portion that is capable of storing a plurality of liquid vessels that accommodate liquids for analyzing samples;
an outside storge cabinet that is installed in the outside of the automatic analyzer and stores the plurality of liquid vessels;
a conveying portion that conveys the liquid vessel between the automatic analyzer and the outside storage cabinet;
a first conveying mechanism that performs the delivering of the liquid vessel between the automatic analyzer and the conveying portion;
a second conveying mechanism that performs the delivering of the liquid vessel between the outside storge cabinet and the conveying portion;
a memory portion that stores management information for managing the liquid that is accommodated in the liquid vessel; and
a control portion that transmits and receives the management information among the automatic analyzer, the outside storage cabinet, and the conveying portion,
wherein position accuracy between the first conveying mechanism and the automatic analyzer is designed to be higher than position accuracy between the first conveying mechanism and the conveying portion.

8. The automatic analyzing system according to claim 7, wherein the first conveying mechanism and the conveying portion are operated so as to include an expansion storage cabinet in which the maximum number of vessels stored capable of being stored in the automatic analyzer is increased.

9. The automatic analyzing system according to claim 8, wherein a display portion is provided that converts the arrangement place of the vessel that is physically stored in the inside of the vessel storing portion and the arrangement place of the vessel that is physically stored in the outside of the vessel storing portion and appears to be stored in the inside of the expansion storage cabinet, to a virtual arrangement place, to display the virtual arrangement place.
